# FASCICULE DE BREVET EUROPEEN

(11) **EP 2 425 170 B1**
(45) Date de publication et mention de la délivrance du brevet: **21.08.2013**
(21) Numéro de dépôt: 10727048.0
(22) Date de dépôt: 28.04.2010
(51) Int. Cl.: F16L 5/00, E03C 1/02

(54) **SYSTEME DE FIXATION D'UN RACCORD POUR CONDUITE DE TRANSPORT DE FLUIDE SUR UNE CLOISON**
SYSTEM ZUR BEFESTIGUNG EINES VERBINDERS FÜR EIN FLUIDTRANSPORTROHR AN EINER WAND
SYSTEM FOR ATTACHING A CONNECTOR FOR A FLUID TRANSPORT PIPE ON A WALL

(30) Priorité: 28.04.2009 FR 0952789
(43) Date de publication de la demande: 07.03.2012
(73) Titulaire: Somatherm, 24000 Perigueux (FR)
(72) Inventeur: CAMBOT-COURRAU, Yves, F-24000 PERIGUEUX (FR); FILLIOUX, Mathieu, F-24460 Agonac (FR)
(74) Mandataire: Henrich, Christel
(86) Numéro de dépôt international: PCT/FR2010/050800
(87) Numéro de publication internationale: WO 2010/125300

(56) Documents cités:
- EP-A2- 0 967 701
- DE-A1- 10 332 035
- DE-C1- 19 520 905
- JP-A- 2000 120 122

## Description

L'invention concerne un système de fixation, sur une cloison, d'un raccord pour une conduite de transport de fluide.

Plus particulièrement, l'invention concerne un tel système, destiné à être monté dans un trou circulaire pratiqué dans l'épaisseur de la cloison, et dans lequel le diamètre du trou est suffisant pour permettre l'introduction d'un raccord par l'extérieur.

L'invention s'applique notamment à des conduites d'installation sanitaires ou à des conduites de chauffage.

On connaît aujourd'hui différentes méthodes pour la fixation d'un raccord pour une conduite de transport de fluide sur une cloison. Une méthode de fixation courante consiste à aménager, à l'arrière de la cloison, une trappe de visite sur laquelle vient se fixer le raccord. Cette méthode exclut toutefois le cas des doubles cloisons. Elle nécessite l'intervention simultanée de deux opérateurs, placés de chaque côté de la cloison, et s'avère par ailleurs peu esthétique. Enfin, la réalisation d'un trou traversant, qui n'est à aucun moment rebouché ou renforcé, affaiblit considérablement la cloison.

Une autre méthode connue consiste à pratiquer une saignée dans la cloison pour y faire passer la conduite, puis à fixer un raccord au fond de la saignée, par vissage si celui-ci est équipé d'une fixation arrière, ou par scellement au plâtre dans le cas contraire. Souvent, il est cependant nécessaire d'utiliser des supports intermédiaires pour pouvoir fixer convenablement le raccord et faire en sorte que celui-ci affleure à l'extérieur de la cloison afin de recevoir une robinetterie. Pour faciliter la fixation, on utilise quelques fois un boîtier, noyé dans la maçonnerie, sur lequel sont fixées la ou les conduites, mais cette méthode reste laborieuse.

Une autre solution connue, aisément applicable aux doubles cloisons, consiste à utiliser une plaque support sur laquelle on fixe le raccord et qui ensuite est elle-même fixée sur l'avant de la cloison. Un tel système est décrit par exemple dans le brevet EP 1 348 815 B1. Mais ce système nécessite lui aussi la réalisation, dans la cloison, d'un trou de diamètre suffisant pour le passage du raccord, qui affaiblit la cloison.

Un système de fixation selon le préambule de la revendication 1 est décrit dans le document DE 195 20 905 C1.

L'invention a pour but de proposer une nouvelle solution pour la fixation d'un raccord pour une conduite de transport de fluide sur une cloison, permettant une fixation aisée de la conduite par un côté seulement de la cloison et le renforcement de la cloison au niveau du trou de passage du raccord et de la conduite.

En particulier, l'invention a pour objet un système de fixation d'un raccord pour conduite de transport de fluide sur une cloison, destiné à être monté dans un trou circulaire pratiqué dans l'épaisseur de ladite cloison, le diamètre dudit trou étant suffisant pour permettre introduction du raccord par l'extérieur, ledit système de fixation comportant une douille munie d'une collerette externe venant prendre appui sur la face avant de la cloison, des moyens d'appui interne aptes à venir en appui sur la face arrière de la cloison, des moyens d'adaptation du raccord et des moyens de renfort de la cloison, caractérisé en ce que
les moyens d'appui interne comprennent au moins une mâchoire insérée dans la douille et mobile radialement vers l'extérieur de celle-ci. Dans ce cas, le système de fixation comprend en outre un dispositif d'expansion apte à coopérer avec la au moins une mâchoire pour la déplacer radialement vers l'extérieur de la douille.

Pour la fixation d'un raccord pour une conduite de transport de fluide, un trou est tout d'abord pratiqué dans l'épaisseur d'une cloison, puis le raccord est monté et fixé à l'intérieur du trou, affleurant sur la face avant de la cloison. La cloison, percée d'un trou de dimensions suffisantes pour permettre l'introduction et la fixation du raccord, se trouve inévitablement affaiblie. Contrairement aux dispositifs de l'art antérieur utilisables sur doubles cloisons, qui se contentent de recouvrir en surface l'ouverture du trou de passage, le système de fixation selon la présente invention comprend des moyens de renfort de la cloison, aptes à venir en appui sur la paroi interne du trou de la cloison. Ainsi, lorsque le système de fixation selon l'invention est fixé à la cloison, les moyens de renfort se substituent à la portion de cloison retirée lors du perçage du trou. La cloison est donc renforcée, quelles que soit les dimensions du trou.

Le système de fixation selon la présente invention est aisément maintenu en position, la cloison étant prise en sandwich entre la collerette externe du boîtier et des moyens d'appui interne. La collerette externe, en particulier, offre une surface d'appui importante, qui permet au système de résister efficacement aux contraintes d'utilisation, et tout particulièrement à l'arrachement.

En outre, le présent système de fixation peut être utilisé sur tous types de cloisons, en plâtre, bois, composite ou autre, puisque la seule intervention nécessaire sur la cloison est le perçage d'un trou traversant circulaire, lequel est aisément obtenu, par exemple grâce à une scie cloche.

Selon un aspect avantageux de l'invention, le système de fixation comprend des moyens de réglage de la distance entre la collerette externe de la douille et les moyens d'appui interne. De cette manière, le système de fixation peut s'adapter à toutes les épaisseurs de cloison sans que son utilisation en soit modifiée.

Avantageusement, la douille, dont le diamètre extérieur est sensiblement égal à celui du trou de la cloison, peut constituer un moyen de renfort de la cloison.

Avantageusement, les moyens d'appui interne comprennent deux mâchoires, chacune étant logée dans une fenêtre prévue dans la douille, les dites mâchoires étant aptes à se déplacer vers l'extérieur dans des directions radialement opposées.

Selon un exemple de réalisation de l'invention, chaque mâchoire comprend une surface d'appui plane apte à venir en appui contre la face arrière de la cloison, et prolongée par une portion avant formant moyen de renfort, munie d'une surface convexe apte à venir en appui sur la paroi interne du trou de la cloison lorsque la surface d'appui de la mâchoire vient en contact avec la face arrière de la cloison.

Le dispositif d'expansion peut par exemple être un noyau d'expansion conformé avec une collerette externe apte à s'adapter à une collerette interne située à l'avant de la douille et apte à être inséré à l'intérieur de la douille afin de coopérer avec la ou chaque mâchoire pour la déplacer radialement vers l'extérieur de la douille. Au montage, les moyens d'appui interne formant mâchoire sont dans une position rétractée à l'intérieur de la douille. Ils peuvent ensuite être déployés radialement vers l'extérieur par le simple emboîtement du noyau d'expansion dans la douille. Une telle configuration permet un montage aisé et sûr du système, avec un nombre limité d'opérations et donc peu de risques de perte de pièces du type vis, écrou, etc.

Selon une disposition avantageuse, la douille comporte au moins un trou et la ou chaque mâchoire comporte au moins une partie filetée, chaque trou de la douille et la partie filetée correspondante de la mâchoire étant aptes à venir en alignement lorsque le noyau d'expansion est monté dans la douille. De cette façon, il est possible de bloquer, par vis, la position radiale de la ou chaque mâchoire. Par ailleurs, il est possible de régler la distance entre la collerette externe de la douille et la ou chaque mâchoire, par translation de cette dernière sous l'effet du vissage. De cette façon, le système de fixation peut aisément être adapté à des parois d'épaisseurs diverses.

De préférence, le noyau d'expansion présente une partie de guidage de diamètre extérieur croissant destinée à coopérer avec la ou chaque mâchoire en vue de son déplacement radial. Cette configuration permet un déplacement progressif des mâchoires vers l'extérieur de la douille, jusque dans leur position déployée.

La douille peut comporter une échancrure prévue entre les dites fenêtres et permettant le montage des mâchoires dans la douille et le passage de la conduite. Avantageusement, le noyau d'expansion est prévu avec une échancrure pouvant être alignée avec l'échancrure de la douille lorsque le noyau d'expansion est monté dans la douille, de manière à permettre le passage de la conduite.

De préférence, le noyau d'expansion comporte un épaulement interne situé à proximité de sa collerette externe et sur lequel une collerette d'un raccord est apte à venir en appui. Le noyau d'expansion peut en outre comporter un filetage interne entre ledit épaulement interne et ladite collerette externe, apte à coopérer avec un filetage externe d'une pièce de blocage de manière à bloquer la collerette du raccord contre l'épaulement interne du noyau d'expansion.

Selon un second mode de réalisation qui ne fait pas partie de l'invention, la douille comprend un premier manchon et un second manchon, ledit second manchon comportant un filetage interne apte à coopérer avec un filetage externe du premier manchon. Dans ce second mode de réalisation, le second manchon de la douille peut constituer un moyen de renfort de la cloison. En outre, pour assurer son blocage en rotation à l'intérieur du trou de la cloison, après montage, le second manchon peut comporter, sur sa périphérie extérieure, des nervures de blocage en rotation.

Selon une première variante du second mode de réalisation, les moyens d'appui interne peuvent par exemple comprendre une pluralité de languettes élastiques radiales réparties sur la périphérie du second manchon, les languettes étant biseautées de manière à pouvoir fléchir en coopérant avec la paroi interne du trou pratiqué dans la cloison et à revenir dans leur position initiale une fois dégagées du trou. Après montage, les languettes élastiques emprisonnent donc la paroi sur sa face arrière, tandis que la collerette externe de la douille est en appui sur la face avant de la cloison. Le cas échéant, on aura éventuellement adapté la distance entre la collerette externe de la douille et les languettes élastiques par vissage du premier manchon dans le trou fileté du second manchon.

Selon une seconde variante du second mode de réalisation, les moyens d'appui interne peuvent comprendre une pluralité de languettes orientables solidaires du second manchon et faisant saillie radialement vers l'intérieur du trou fileté dans lequel le premier manchon est apte à être engagé, les dites languettes orientables étant aptes à se déployer radialement vers l'extérieur sous l'effet du vissage du premier manchon.

L'invention et ses avantages apparaîtront mieux à la lecture de la description détaillée qui suit, d'exemples de réalisation de l'invention. Cette description fait référence aux figures annexées, sur lesquelles :
- la figure 1 est une vue en perspective, éclatée, par l'avant, d'un système de fixation selon un premier mode de réalisation de l'invention ;
- la figure 2 est une vue en perspective éclatée, par l'arrière, du système de fixation de la figure 1 ;
- les figures 3A à 3C sont des vues de détail du guidage en translation des moyens d'appui interne du système de fixation selon le premier mode de réalisation de l'invention ;
- les figures 4 à 7 sont des vues en coupe de différentes étapes de fixation sur cloison du système selon le premier mode de réalisation de l'invention ;
- la figure 8 est une vue en perspective du système de fixation selon le premier mode de réalisation de l'invention, en position montée ;
- la figure 9 est une vue en perspective, éclatée, par l'avant, d'un système de fixation selon une première variante d'un second mode de réalisation qui ne fait pas partie de l'invention ;
- la figure 10 est une vue en perspective, éclatée, par l'arrière, du système de fixation de la figure 9 ;
- la figure 11 est une vue en coupe du système de fixation des figures 9 et 10, monté sur une cloison ;
- la figure 12 est une vue en perspective d'une seconde variante du second mode de réalisation ;
- les figures 13 et 14 sont des vues en coupes des étapes de montage du système selon la seconde variante du second mode de réalisation ;
- les figures 15 à 18 illustrent différents modes d'adaptation d'un raccord dans un système de fixation selon le second mode de réalisation .

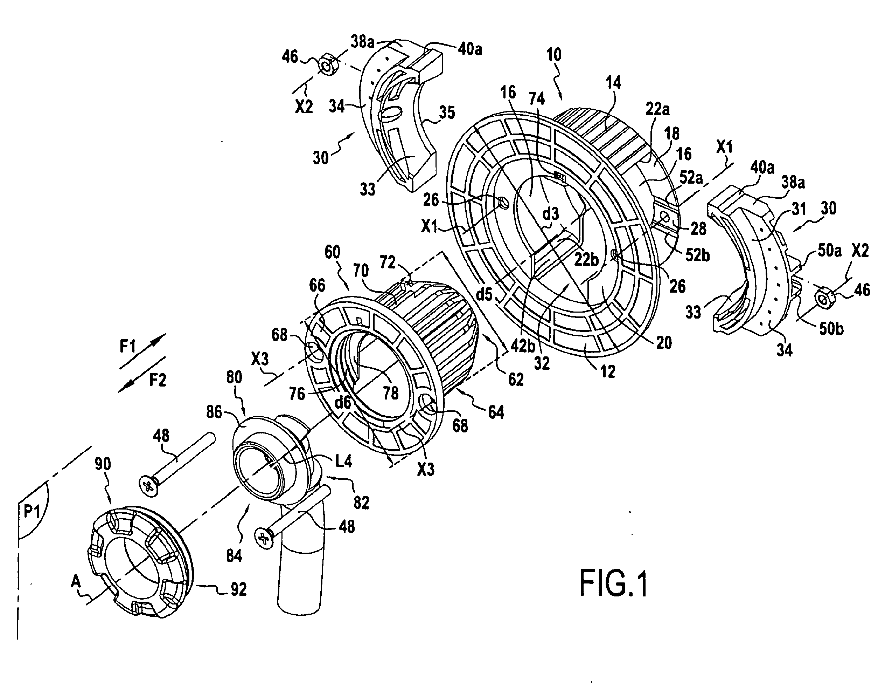

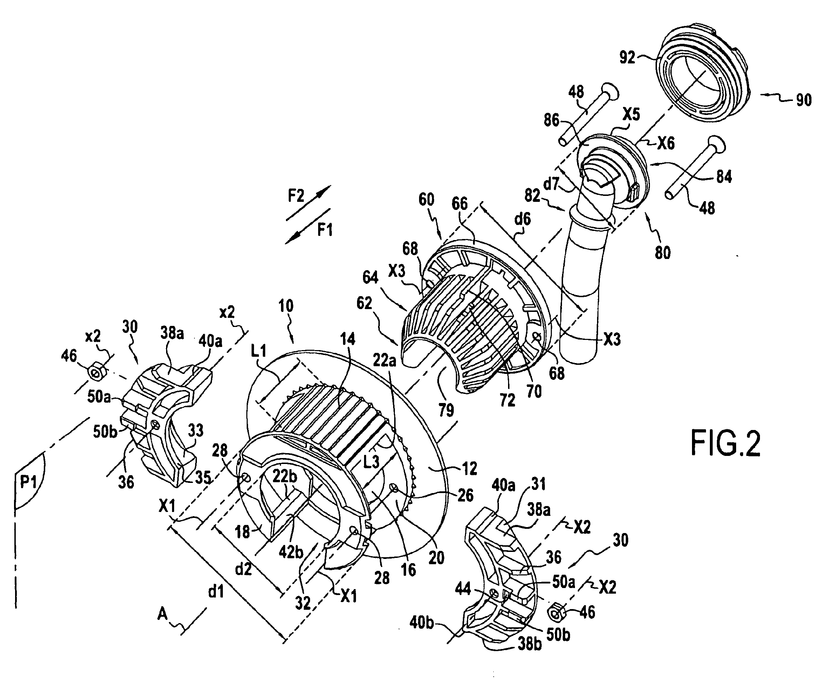

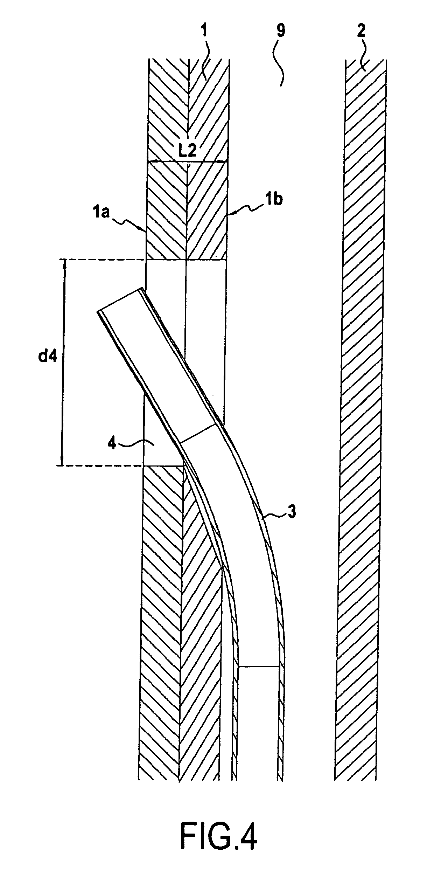

Les figures 1 et 2 représentent des vues éclatées d'un système de fixation d'un raccord pour une conduite 3 sur une cloison 1 selon la présente invention. La cloison 1 et la conduite 3 seront décrites plus en détail en référence à la figure 4.

Dans toute la description qui va suivre, l'arrière du système de fixation est défini comme étant dirigé, selon la direction de l'axe A-A, dans le sens d'insertion F1 dudit système dans un trou de la cloison, et l'avant du système comme étant dirigé dans le sens F2 opposé à celui-ci (voir les flèches F1 et F2 sur les figures 1 et 2)

Les composants du système de fixation peuvent par exemple être constitués dans un matériau plastique, par exemple du polyéthylène. Selon d'autres exemples de réalisation, le système de fixation pourra être réalisé dans d'autres matériaux, métalliques par exemple.

Ces composants sont tous parfaitement symétriques par rapport au plan P1 représenté sur les figures 1 et 2. Leurs éléments, de part et d'autre du plan P1, comporteront par conséquent des références numériques identiques.

Le système de fixation comprend un boîtier de raccordement sous la forme d'une douille de renfort 10, destinée à être introduite dans un trou 4 de la cloison 1. La douille de renfort 10 présente une longueur axiale L1, un diamètre extérieur d1, et un diamètre intérieur d2. La longueur axiale L1 de la douille est prévue pour être supérieure à la largeur L2 de la cloison 1. En outre, son diamètre extérieur d1 est sensiblement égal au diamètre d4 du trou 4 de la cloison. De cette façon, la douille 10 peut combler entièrement le trou 4 dans lequel elle est insérée et constitue donc un moyen de renfort de la cloison.

A son extrémité avant, la douille de renfort 10 est munie d'une collerette externe 12 de diamètre extérieur d3 destinée à venir prendre appui contre la face avant 1a de la cloison 1. On comprendra aisément que la résistance à l'arrachement de la douille 10 est d'autant plus grande que le diamètre d3 de sa collerette externe 12 est important.

Régulièrement réparties sur sa surface extérieure, la douille de renfort 10 comporte des nervures axiales 14, destinées à réaliser un premier blocage en rotation après son insertion à force dans le trou.

Comme illustré sur les figures 1 et 2, la douille de renfort 10 comporte deux fenêtres 16, diamétralement opposées, destinées à accueillir respectivement deux mâchoires 30 formant moyen d'appui interne, aptes à venir en appui sur la face arrière de la cloison.

Il convient de noter que l'exemple de réalisation illustré sur les figures et décrit ici n'est pas limitatif de la présente invention. Par exemple, la douille de renfort 10 peut comporter plus de deux fenêtres, chaque fenêtre étant apte à accueillir une mâchoire 30.

Pour des raisons de simplification, on ne décrira dans la suite qu'un seul côté du système de fixation. Dans la mesure où ce dernier est parfaitement symétrique par rapport au plan P1 dans l'exemple envisagé, les éléments décrits se retrouveront de manière identique sur son côté opposé.

Les rebords latéraux de la fenêtre 16 sont constitués par un fond 18 situé à l'extrémité arrière de la douille 10 et par une collerette interne 20 située à son extrémité avant. Les rebords longitudinaux 22a, 22b de la fenêtre 16 s'étendent, eux, dans la direction axiale A-A, sur une longueur L3, légèrement inférieure à la longueur L1 de la douille de renfort 10.

La collerette interne 20 de la douille 10 présente, de part et d'autre du plan de symétrie P1, un trou traversant 26 non fileté, dont l'axe X1 est parallèle à l'axe A-A de la douille. De la même manière, le fond 18 présente, de part et d'autre du plan de symétrie P1, un trou traversant 28 non fileté, dont l'axe est confondu avec l'axe X1 du trou 26 de la collerette interne 20 auquel il fait face.

Chaque fenêtre 16 est destinée à recevoir une mâchoire 30 en forme de croissant telle que représentée sur la figure 2, apte à être insérée dans la douille 10 par une échancrure 32 prévue entre les deux fenêtres 16.

Chaque mâchoire 30 comporte une portion avant munie d'une surface radiale externe convexe 31 dont le rayon de courbure est, de préférence, sensiblement égal à celui du trou 4 de la cloison 1. A son extrémité arrière, la portion avant de la mâchoire est prolongée par une surface d'appui plane 34, perpendiculaire à l'axe A-A de la douille, et apte à venir en appui contre la face arrière 1b de la cloison 1. Sur sa face arrière, cette surface d'appui 34 est avantageusement consolidée par des renforts orthogonaux 36. A l'extrémité arrière de son côté radial interne, la mâchoire est munie d'une portion concave 35 de section constante en arc de cercle, prolongée vers l'avant de la mâchoire par une portion de guidage évasée 33.

A distance de chacune de ses extrémités angulaires, la mâchoire 30 comporte une surface de guidage 38a, 38b plane, perpendiculaire à la surface d'appui 34. Les deux surfaces de guidage 38a, 38b de la mâchoire 30 sont parallèles entre elles et aptes à coopérer avec les rebords longitudinaux 22a, 22b de la fenêtre 16, de sorte que la mâchoire 30 peut se translater radialement et axialement à l'intérieur de la douille de renfort 10. A son extrémité radiale interne, autrement dit celle située du côté de la portion concave 35 de la mâchoire 30, chaque surface de guidage 38a, 38b est prolongée par une butée 40a, 40b destinée à coopérer avec une contre-butée 42a, 42b correspondante de la douille afin d'empêcher que la mâchoire 30 ne se translate au-delà d'une certaine mesure vers l'extérieur et ne se désengage complètement de la douille 10. Dans l'exemple illustré sur les figures 1 et 2, les butées 40a, 40b sont constituées par des surfaces inclinées, dirigées dans des directions sensiblement tangentielles à la surface latérale convexe des mâchoires 30. Comme alternative, les butées 40a, 40b pourraient par exemple présenter une forme en arc de cercle. Les contre-butées 42a, 42b de la douille 10 sont adjacentes aux rebords longitudinaux 22a, 22b de la fenêtre 16 avec lequel coopèrent les surfaces de guidage 38a, 38b.

Grâce à la configuration décrite ci-dessus, la mâchoire 30 peut évoluer radialement entre une position de montage, rétractée, dans laquelle son enveloppe convexe ne dépasse pas le profil extérieur de la douille 10 et une position déployée dans laquelle elle fait saillie hors de la fenêtre 16, par exemple sous l'effet d'une contrainte radiale appliquée par un noyau d'expansion 60 tel que décrit dans la suite, inséré à l'intérieur de la douille 10.

Pour éviter qu'elles ne se déplacent à l'intérieur des fenêtres 16 lorsqu'elles se trouvent dans leur position rétractée, les mâchoires 30 sont munies, sur leur face arrière de renfort, de rails 50a, 50b aptes à coulisser dans des rainures correspondantes 52a, 52b formées sur le fond 18 de la douille 10.

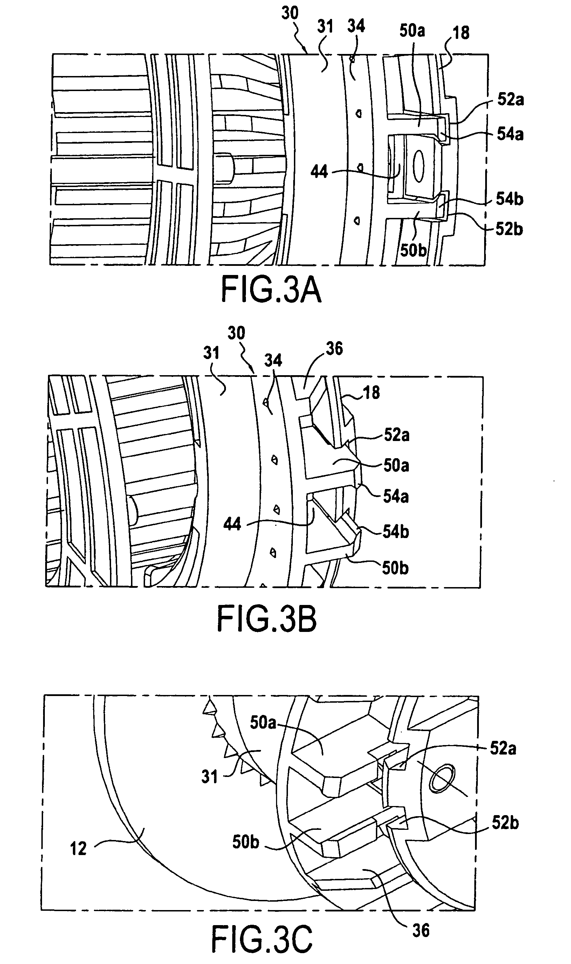

Ce système de glissière est décrit plus en détail en référence aux figures 3A à 3C.

Sur la figure 3A, on a représenté une mâchoire 30 en position rétractée, après montage dans la douille 10. Sur sa face arrière plaquée contre le fond 18 de la douille 10, la mâchoire comporte deux rails parallèles 50a, 50b. Dans l'exemple illustré ici, chaque rail 50a, 50b prolonge l'un des renforts orthogonaux 36 prévus sur la face arrière de la mâchoire. Ces rails 50a, 50b sont terminés par des bourrelets 54a, 54b engagés dans des rainures correspondantes 52a, 52b formées sur le fond 18 de la douille 10. Une glissière est ainsi formée, qui permet le blocage en translation de la mâchoire 30 dans la direction axiale A-A.

Sous l'effet d'une poussée appliquée radialement vers l'extérieur, la mâchoire 30 est apte à coulisser contre le fond 18 de la douille 10, comme illustré sur la figure 3B. Lorsque la mâchoire 30 atteint finalement sa position déployée, c'est-à-dire lorsque ses butées 40a, 40b viennent en appui sur les contre-butées correspondantes 42a, 42b de la douille 10, les rails 50a, 50b sont désengagés de leur rainure respective 52a, 52b, ce par quoi la mâchoire se retrouve libre en translation dans la direction axiale A-A (voir figure 3C).

Comme évoqué précédemment, les mâchoires 30 sont aptes à être déployées vers l'extérieur de la douille par un dispositif d'expansion. Dans l'exemple illustré sur les figures 1 à 8, ce dispositif d'expansion est un noyau d'expansion 60 apte à être inséré dans la douille 10 et à coopérer avec les mâchoires 30. D'autres dispositifs d'expansion pourront toutefois être envisagés.

Comme illustré sur les figures 1 et 2, le noyau d'expansion 60 comporte, à son extrémité arrière, une portion de guidage sensiblement conique 62 prolongée par une portion cylindrique 64 de diamètre extérieur d5. Le noyau d'expansion 60 étant destiné à être inséré dans la douille 10, le diamètre extérieur d5 de la portion cylindrique 64 n'excède pas le diamètre intérieur d2 de la collerette interne 20 de la douille 10.

La portion de guidage 62 du noyau d'expansion 60 est destinée à coopérer avec les mâchoires 30 en vue de leur déplacement radial. De par sa forme conique, elle est apte à coopérer avec la portion de guidage évasée 33 de chaque mâchoire 30, permettant un déplacement progressif des dites mâchoires 30, évitant les à-coups et les blocages inopportuns lors du montage. De manière générale, la portion de guidage 62 pourra présenter toute forme de révolution de diamètre extérieur croissant. Ainsi, comme variante, on pourra par exemple prévoir une portion de guidage 62 de forme hémisphérique.

A son extrémité avant, le noyau d'expansion 60 comporte une collerette externe 66 de diamètre d6, apte à venir s'appuyer contre la face avant de la collerette interne 20 de la douille lors du montage. En outre, la collerette externe 66 est percée, de part et d'autre du plan P1, d'un trou traversant non fileté 68, d'axe X3.

Le noyau d'expansion 60 comporte une échancrure 79 s'étendant, dans la direction axiale, depuis sa collerette externe 66 jusqu'à l'extrémité arrière de la partie de guidage 62, de sorte que son profil interne présente une forme de « U » renversé en position de montage. Après montage, l'échancrure 79 du noyau d'expansion 60 et celle 32 de la douille 10 sont apte à se positionner en regard l'une de l'autre, de manière à permettre le passage de la conduite 3.

Pour permettre son positionnement prédéterminé à l'intérieur de la douille, son blocage en rotation et/ou son blocage en translation à l'intérieur de celle-ci, le noyau d'expansion 60 comporte, sur sa surface externe, des moyens de positionnement aptes à coopérer avec des moyens complémentaires de la douille 10. Dans l'exemple représenté sur les figures 1 et 2, le noyau d'expansion 60 est muni d'une rainure 70, s'étendant depuis la collerette externe 66, dans une direction parallèle à l'axe A-A. A proximité de cette rainure 70, légèrement décalée dans la direction circonférentielle et en direction axiale vers l'arrière du noyau d'expansion 60, le noyau d'expansion 60 comporte une butée de fin de course 72. La butée de fin de course 72 et la rainure 70 sont aptes à être insérées successivement dans une fente correspondante 74, prévue dans la collerette interne 20 de la douille 10, par un léger pivotement du noyau d'expansion 60 autour de l'axe A-A. Une fois le noyau d'expansion 60 monté à l'intérieur de la douille 10, la rainure 70 est apte à assurer son blocage en rotation par rapport à la douille 10, tandis que la butée de fin de course 72 assure son blocage en translation.

La position de la rainure 70 et de la fente correspondante 74 de la douille est choisie afin que, lorsque le noyau d'expansion 60 est inséré complètement dans la douille 10, sa collerette externe 66 vienne en appui sur la collerette interne 20 de la douille 10 et que chaque trou traversant 68 du noyau d'expansion 60 vienne en alignement avec les trous 26, 28 de la collerette interne 20 et du fond 18 de la douille 10. Les axes X1 et X3 sont donc confondus.

Chaque mâchoire 30 comporte également une partie filetée apte à venir en alignement avec le trou 26 de la collerette interne 20 de la douille et le trou 68 du noyau d'expansion 60 lorsque celui-ci est monté dans la douille de renfort 10. Cette partie filetée peut par exemple être un trou fileté réalisé directement dans le corps de la mâchoire 30. Selon un autre exemple de réalisation, illustré sur la figure 2, la mâchoire 30 présente, dans sa partie médiane, une cage d'écrou 44 emprisonnant un écrou 46. Cette configuration permet une sollicitation moindre de la mâchoire, et lui assure ainsi une plus longue durée de vie. L'écrou 46 est apte à se positionner de telle manière que son axe X2 soit confondu avec l'axe X1 des trous traversants 26, 28 de la collerette interne 20 et du fond 18 de la douille 10, ainsi qu'avec l'axe X3 du trou traversant de la collerette externe 66 du noyau d'expansion 60, lorsque les mâchoires 30 sont dans leur position déployée, c'est-à-dire lorsque le noyau d'expansion 60 est complètement inséré dans la douille 10. Dans cette position, l'écrou 46 est apte à coopérer avec une vis 48 permettant de bloquer la position radiale de la mâchoire et de régler la distance entre la collerette externe 12 de la douille 10 et ladite mâchoire 30.

Le système décrit précédemment est destiné à la fixation d'un raccord 80, représenté sur les figures 1 et 2. Ce raccord présente une portion arrière 82, destinée à recevoir une extrémité de la conduite 3, et une portion avant 84 sur laquelle pourra par exemple venir se fixer une robinetterie. A une distance L4 de son extrémité avant, le raccord 80 est muni d'une collerette 86, apte à venir en appui sur un épaulement interne 78 correspondant du noyau d'expansion. Entre cet épaulement interne 78 et la collerette externe 66, le noyau d'expansion 60 comporte un filetage interne 76. Ce filetage interne 76 est apte à coopérer avec le filetage externe 92 d'un écrou 90 formant pièce de blocage. Lors du montage, le vissage de l'écrou 90 sur le noyau d'expansion 60 permettra de serrer la collerette 86 du raccord 80 contre la collerette interne 72 du noyau d'expansion 60. L'épaulement interne 78 du noyau d'expansion et l'écrou 90 coopérant par vissage avec ledit noyau d'expansion forment ici des moyens d'adaptation du raccord 80.

Le montage sur cloison du système de fixation décrit ci-dessus va à présent être décrit en liaison avec les figures 4 à 8.

La figure 4 illustre une double cloison constituée d'une première cloison 1 de largeur L2 et d'une seconde cloison 2. Ces deux cloisons 1, 2 sont séparées par un espace 9 où passe une conduite 3 destinée à être raccordée à une robinetterie (non représentée) prévue du côté avant 1a de la première cloison 1. Pour le passage de la conduite 3, un trou circulaire 4 de diamètre d4 a été pratiqué dans l'épaisseur de la première cloison 1, par exemple à l'aide d'une scie cloche. Pour des raisons évidentes de simplification, la première cloison 1 sera désignée dans toute la suite par « cloison ».

Lors d'une première étape de montage illustrée sur la figure 4, la conduite 3 est passée à travers le trou circulaire 4 de la cloison 1, et tirée jusqu'à ce qu'une longueur suffisante de conduite 3 soit disponible sur le côté avant 1a de la cloison 1.

A ce stade, la douille de renfort 10, le noyau d'expansion 60, le raccord 80 et l'écrou 90 sont désolidarisés.

Les deux mâchoires 30 sont insérées dans les fenêtres 16 de la douille de renfort 10, par son échancrure 32, et les rails 50a, 50b de chaque mâchoire 30 sont logés dans les rainures correspondantes 52a, 52b du fond 18 de la douille 10. Les mâchoires 30 sont dans leur position rétractée, de sorte qu'elles ne dépassent pas de l'enveloppe externe de la douille 10.

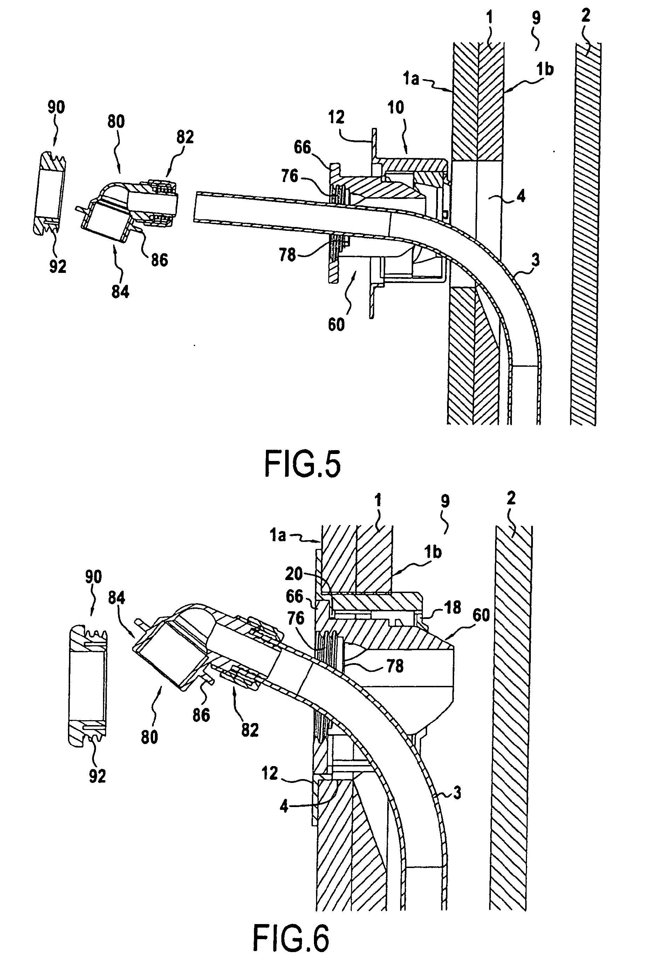

Dans une seconde étape illustrée sur la figure 5, la douille de renfort 10 puis le noyau d'expansion 60 sont successivement enfilés sur la conduite 3. L'extrémité de la conduite 3 peut alors être fixée à la partie arrière 82 du raccord 80.

Lors d'une troisième étape illustrée sur la figure 6, la douille de renfort 10 est insérée dans le trou 4 de la cloison 1, jusqu'à ce que sa collerette externe 12 vienne en appui contre la face avant 1a de la cloison 1. Le diamètre d1 de la douille de renfort 10 étant sensiblement identique à celui d4 du trou 4, le trou 4 est totalement comblé par la douille 10, ce qui renforce la cloison 1. Par ailleurs, lorsque la douille 10 est complètement insérée dans le trou 4 de la cloison 1, les mâchoires 30, toujours dans leur position rétractée et plaquée contre le fond 18 de la douille, sont situées derrière la face arrière 1b de la cloison 1, hors du trou 4.

Le noyau d'expansion 60 est ensuite inséré dans la douille de renfort 10. Il est d'abord orienté convenablement autour de l'axe A-A pour que la butée de fin de course 72 puisse être engagée dans la fente correspondante 74 de la collerette interne 20 de la douille 10. Une fois la butée de fin de course 72 insérée dans la fente 74, le noyau d'expansion 60 est pivoté légèrement autour de l'axe A-A, de sorte que la butée de fin de course 72 vienne en appui contre la face interne de la collerette interne 20, et que la rainure 70 du noyau d'expansion 60 puisse à son tour être insérée dans la fente 74. L'insertion est achevée lorsque la collerette externe 66 du noyau d'expansion 60 se trouve en appui contre la collerette interne 20 de la douille de renfort 10. La butée de fin de course 72 empêche le retrait du noyau d'expansion 60 et la rainure 70, en coopérant avec la fente 74 de la douille 10, assure son blocage en rotation. Dans cette position, l'échancrure 79 du noyau d'expansion 60 est alignée avec l'échancrure 32 de la douille 10.

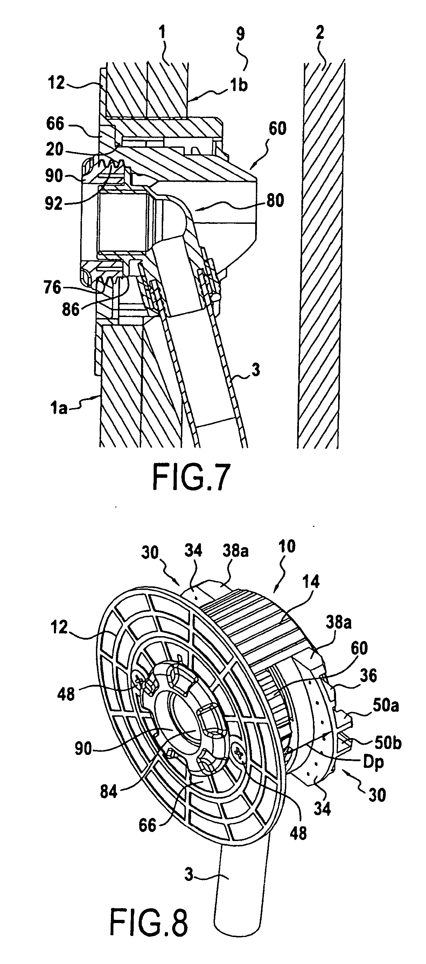

Lors de l'introduction du noyau d'expansion 60 dans la douille 10, sa portion de guidage conique 62 coopère avec les portions de guidage évasées 33 des mâchoires 30 et entraîne la translation progressive des mâchoires vers l'extérieur de la douille 10, dans des directions radialement opposées. Les rails 50a, 50b des mâchoires coulissent alors progressivement le long des rainures correspondantes 52a, 52b prévues sur le fond 18 de la douille 10, vers l'extérieur. Lorsque le noyau d'expansion est complètement inséré dans la douille, les mâchoires 30 se trouvent dans leur position déployée, comme illustré sur la figure 8. La surface externe de la portion cylindrique 64 du noyau d'expansion est alors en contact avec la portion concave 35 de chaque mâchoire 30. Les butées de fin de course 40a, 40b sont en appui sur les contre-butées correspondantes 42a, 42b et les rails 50a, 50b sont désengagés des rainures correspondantes 52a, 52b du fond 18 de la douille 10. Les mâchoires 30 sont alors libres en translation dans le sens F2 à l'intérieur des fenêtres 16. Conformément à la description faite précédemment, de part et d'autre de la douille 10, le trou traversant du fond 18 de la douille 10, celui de la collerette interne 20, celui de la collerette externe 66 du noyau d'expansion 60 et l'écrou 46 sont en alignement. Les axes X1, X2 et X3 sont confondus.

Une quatrième étape de montage consiste alors à insérer la vis 48 par le trou traversant du noyau d'expansion 60, à travers le trou 26 de la collerette interne 20, et à la visser dans l'écrou captif 46, bloquant la position radiale de la mâchoire 30. Par serrage de la vis 48, on provoque la translation de la mâchoire 30 le long des rebords longitudinaux 22a, 22b de la douille 10, dans la direction axiale A-A. De cette manière, il est possible de régler la distance Dp (représentée sur la figure 8) entre leur surface d'appui respective 34 et la collerette externe 12 de la douille 10. La fixation de la douille 10 sur la cloison 1 est terminée lorsque la distance Dp est égale à la largeur L2 de la cloison, c'est-à-dire lorsque les surfaces d'appui 34 des mâchoires 30 viennent au contact de la face arrière 1b de la cloison. La cloison se trouve alors enserrée entre la collerette externe 12 et les surfaces d'appui 34 des mâchoires 30.

A ce stade, la portion avant de chaque mâchoire 30 est insérée à l'intérieur du trou 4 de la cloison 1 et sa surface externe convexe 31 vient en appui contre la paroi interne du trou 4 de la cloison 1. La cloison est ainsi renforcée, d'une part par la douille 10 dont le diamètre extérieur est sensiblement égal à celui du trou de la cloison, et d'autre part par la surface externe convexe 31 de chaque mâchoire 30. Dans ce mode de réalisation, les moyens de renfort de la cloison sont constitués par la douille 10 et les surface externes convexes 31 des mâchoires 30.

Selon un autre exemple de réalisation de l'invention, la douille 10 pourra être prévue avec un diamètre extérieur légèrement inférieur à celui de la cloison. Dans ce cas, le déploiement des mâchoires s'effectue d'une façon similaire à celle décrite précédemment. Toutefois, une fois la mâchoire déployée radialement, la portion avant de chaque mâchoire 30 fait saillie hors de la douille 10, de sorte que la surface externe convexe 31 vient en appui sur la paroi interne du trou de la cloison. Selon cet exemple de réalisation, la douille 10 ne constitue plus un moyen de renfort de la cloison. Ce renfort n'est plus assuré que par les mâchoires 30.

Une cinquième étape de montage illustrée sur la figure 7 consiste à disposer le raccord 80 dans le noyau d'expansion 60 de sorte que sa collerette 86 vient au contact de la collerette interne 72 dudit noyau d'expansion 60. Le passage de la conduite est assuré grâce à l'alignement des échancrures 32 et 79 de la douille 10 et du noyau d'expansion 60.

Enfin, l'écrou 90 est vissé sur le noyau d'expansion 60, ce par quoi la collerette 86 du raccord 80 se retrouve appliquée contre le noyau d'expansion 60.

Le système décrit précédemment permet, après montage, un accès facilité au raccord et à la conduite. Il suffit de dévisser l'écrou 90 pour pouvoir déloger le raccord 80 du noyau d'expansion et tirer la conduite 3 vers l'avant de la cloison 1. La douille de renfort 10 et le noyau d'expansion restent, eux, fixés à la cloison. Les opérations de maintenance sont donc considérablement facilitées.

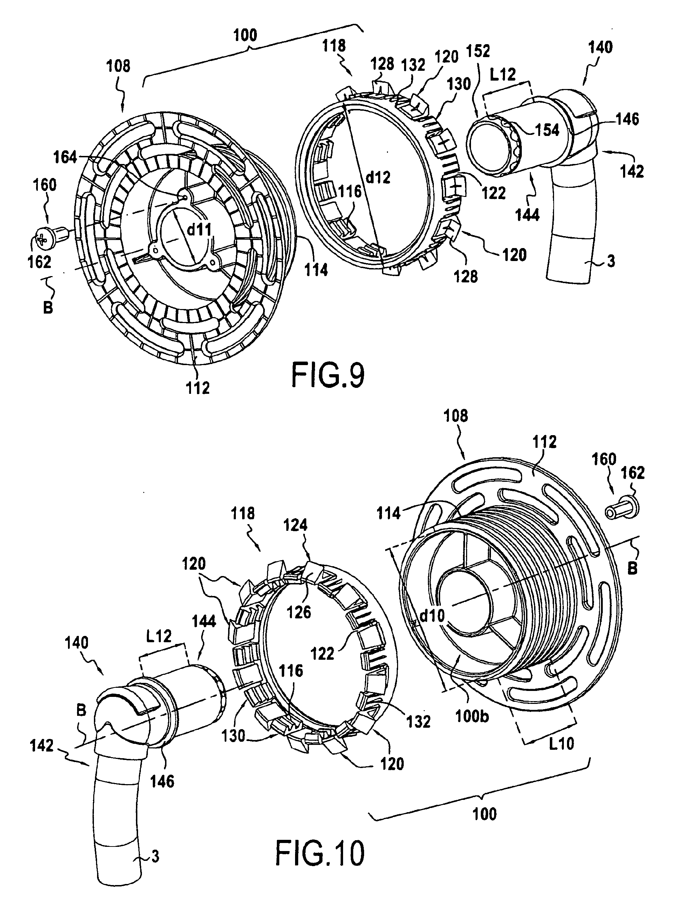

Un second mode de réalisation va à présent être décrit en référence aux figures 9 à 18.

Selon une première variante du second mode de réalisation illustrée sur les figures 9 et 10, le système de fixation comprend une douille de renfort 100 d'axe B-B, constituée d'un premier manchon 108 et d'un second manchon 118, coaxiaux. Le premier manchon 108 présente une longueur axiale L10, un diamètre externe d10 et un diamètre interne d11. A son extrémité avant, le premier manchon 100 est muni d'une collerette externe 112 destinée, lors du montage, à venir en appui contre la face avant 1a de la cloison 1. Le premier manchon 108 comporte un filetage externe 114, apte à coopérer avec le filetage interne 116 du second manchon 118. Le second manchon 118 présente un diamètre externe d12 sensiblement égal au diamètre d4 du trou circulaire 4 de la cloison 1, et est vissé sur l'extrémité arrière du premier manchon 108. Dans ce mode de réalisation, le second manchon 118 constitue un moyen de renfort de la cloison.

Des fentes 122 divisent l'extrémité arrière du second manchon 118 en une pluralité de languettes 120, 130 comprenant des languettes fixes 130 destinées à permettre le vissage du second manchon 118 sur le premier manchon 10 et des languettes d'appui élastiques 120 aptes à fléchir radialement en coopérant avec la paroi interne du trou pratiqué dans la cloison.

Comme illustré sur la figure 10, le filetage interne 116 du second manchon 118 se prolonge sur la face interne des languettes fixes 130. De cette manière, il est possible de visser le premier manchon 100 dans le second manchon 118 et de régler la distance Dp entre la collerette externe 112 et le second manchon 118. Les languettes de blocage 130 comportent en outre, sur leur face externe, des nervures 132 de blocage en rotation permettant d'éviter le déplacement du second manchon 118 à l'intérieur du trou une fois le système monté dans la paroi.

Les languettes d'appui élastiques 120 sont destinées à assurer la fixation de la douille 100 sur la paroi 1, en permettant un appui interne contre la face arrière 1b de la cloison 1, tandis que la collerette externe 112 du premier manchon 108 assure un appui sur la face avant 1a de ladite cloison. Comme illustré sur la figure 10, chaque languette d'appui 120 comprend une portion à profil triangulaire 124 dans laquelle une surface de guidage 126 inclinée par rapport à l'axe B-B de la douille 100 s'étend, depuis l'extrémité distale de la bague 118, radialement vers l'extérieur de celle-ci. Cette surface de guidage inclinée 126 est prolongée par une surface d'appui plane 128 sensiblement perpendiculaire à l'axe B-B de la douille 100. La surface de guidage 126 est destinée à coopérer avec la paroi interne du trou 4. La surface d'appui 128 constitue, elle, un moyen d'appui interne sur la face arrière 1b de la cloison 1.

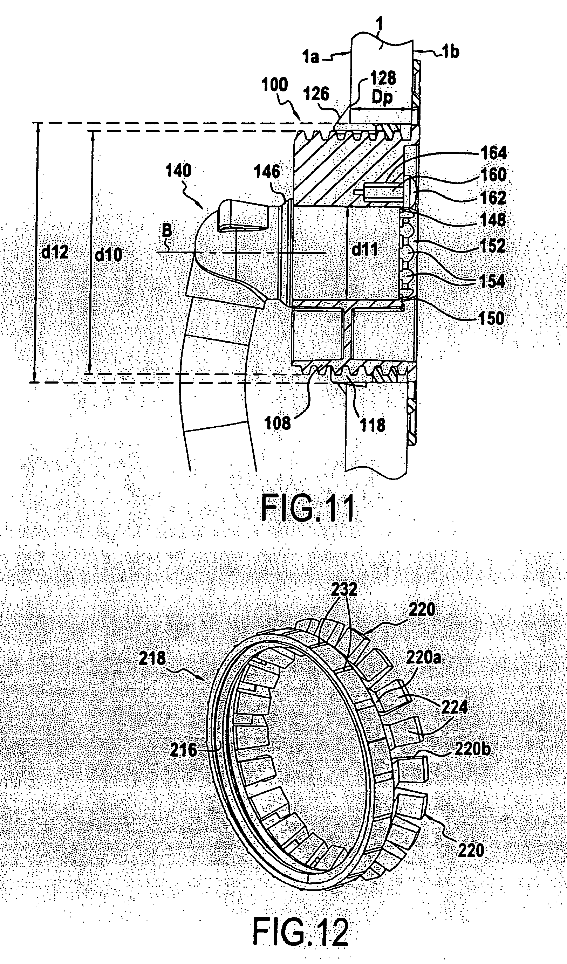

Le raccord 140 destiné à être fixé sur la cloison 1 grâce au système décrit ci-dessus est constitué d'une partie arrière 142 destinée à la fixation d'une conduite 3 et d'une partie avant 144 destinée à être montée sur la douille 100. La partie avant 144 présente, à une distance L12 de son extrémité, une collerette 146 apte à venir s'appuyer sur la face arrière du premier manchon 108 lors du montage. A son extrémité avant, le raccord 140 présente une rainure circonférentielle de blocage en translation 148 apte à coopérer, par clipsage, avec un bossage interne circonférentiel 150 situé à l'extrémité avant du premier manchon 108 (représenté sur la figure 11). Grâce aux moyens d'adaptation du raccord 140 constitués par la rainure 148 et le bossage circonférentiel 150, le raccord peut être fixé sur la douille 100 tout en restant libre en rotation autour de l'axe B-B.

Pour permettre, après montage, le blocage en rotation du raccord à l'intérieur de la douille 100, la portion d'extrémité 152 du raccord, située à l'avant de la rainure de blocage 148, présente, sur sa périphérie, une série d'évidements 154 aptes à recevoir la tête 162 d'une vis 160 engagée dans un trou 164 formé dans la face avant du premier manchon.

Le montage du système de fixation selon ce second mode de réalisation est effectué comme suit.

Le second manchon 118 est tout d'abord vissé sur l'extrémité arrière du premier manchon 108. Puis le raccord 140 est clipsé sur la douille 100 formée par le premier et le second manchon, par coopération entre la rainure 148 de la partie avant 144 du raccord et le bossage interne 150 du premier manchon.

A ce stade, la conduite 3 est fixée sur l'extrémité de la partie arrière 142 du raccord 140.

L'ensemble une fois assemblé, est monté à force dans le trou 4 de la cloison. Les surfaces de guidage inclinées 126 des languettes d'appui 120 assurent l'engagement du système de fixation à l'intérieur du trou 4 en permettant le fléchissement radial des dites languettes 120 vers l'intérieur du second manchon 118 sous l'effet de la contrainte appliquée par la paroi interne du trou 4 de la cloison 1. En l'absence de contrainte radiale, lorsque les portions de guidage inclinées 126 font saillie hors du trou 4 à l'arrière de la cloison 1, les languettes d'appui élastiques 120 se redéploient vers l'extérieur et reprennent leur position initiale. Dans cette position, les surfaces d'appui 128 font face à la face arrière 1b de la cloison 1.

Conformément à la description qui précède, le second manchon 118 est maintenu en position par son montage à force dans le trou 4 de la paroi 1, d'une part, et par les nervures de blocage en rotation 132 prévues sur sa surface externe d'autre part. Le second manchon contribue ainsi à renforcer la paroi 1 au niveau du trou circulaire 4. Le premier manchon 108 est alors vissé dans le second manchon 118, de façon à réduire la distance Dp entre la surface d'appui 128 des languettes d'appui 120 et la collerette externe 112 du premier manchon 100. Le vissage est interrompu au moment où la collerette externe 112 du premier manchon 108 se trouve en appui contre la face avant 1a de la cloison 1 et où les surfaces d'appui 128 des languettes 120 sont en appui contre sa face arrière 1b. A cet instant, le système de fixation est solidement fixé à la cloison.

On notera que le vissage du premier manchon 108 dans le second manchon 118 est rendu possible grâce aux moyens d'adaptation du raccord 140, qui lui permettent de rester libre en rotation à l'intérieur de la douille.

Une fois la douille montée sur la cloison et l'opération de vissage effectuée, une vis 160 est insérée dans le trou 164 prévu sur la face avant du premier manchon 108, de sorte que sa tête 162 coopère avec l'un des évidements 154 prévus sur la périphérie de la portion de fixation 152. De cette manière, le raccord 140 est bloqué en rotation à l'intérieur de la douille 100, et tout déplacement dommageable pour la conduite 3 est évité.

Sur les figures 12 à 14, on a représenté une seconde variante du deuxième mode de réalisation décrit ci-dessus. Tous les éléments décrits en référence à la première variante restent identiques, hormis le second manchon qui présente une forme et un mode de fonctionnement différent.

Le second manchon 218 présente ici un filetage interne 216 apte à coopérer avec le filetage externe 114 du premier manchon 100, comme dans le cas de la première variante. Des nervures de blocage en rotation 232 sont réparties régulièrement sur toute sa périphérie. A son extrémité arrière, le second manchon 218 est prolongé par une pluralité de languettes élastiques orientables 220 en forme de L, formant moyens d'appui interne. La partie arrière 220b de chaque languette s'étend perpendiculairement à sa partie avant 220a, vers l'extérieur du second manchon 218, et comporte des surfaces d'appui 224 aptes à venir en appui contre la face arrière 1b de la cloison.

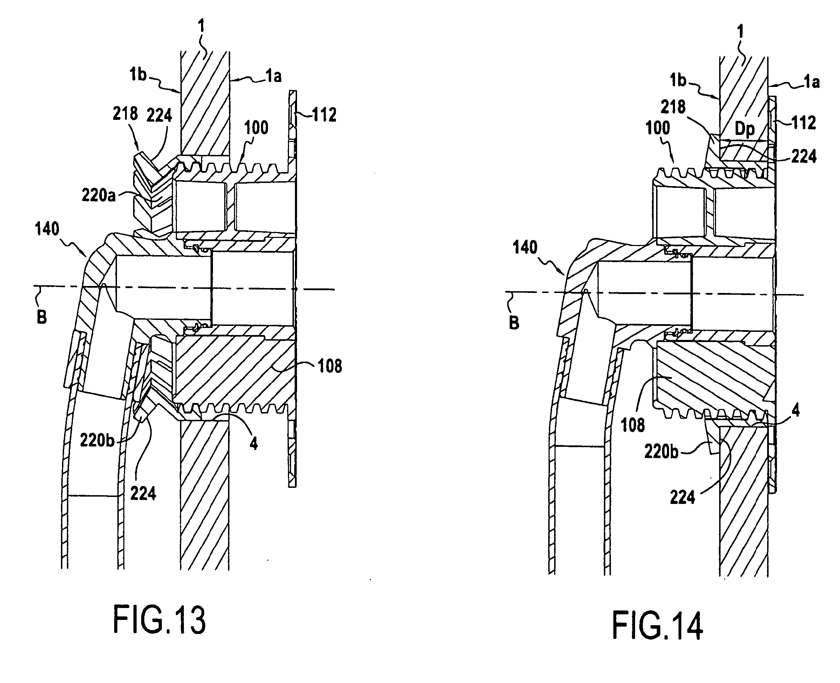

Avant montage, les languettes orientables 220 se trouvent dans une position rétractée (représentée sur les figures 12 et 13) dans laquelle elles font saillie radialement vers l'intérieur du trou fileté dans lequel le premier manchon 108 est apte à être engagé. Sous l'effet du vissage du premier manchon 108 dans le second manchon 218 de la douille, les languettes 220 sont aptes à se déployer radialement vers l'extérieur dans une position dans laquelle les surfaces d'appui 224 sont parallèles à la face arrière 1b de la cloison 1 et lui font face.

Le montage du système est sensiblement identique à celui décrit en référence à la première variante.

Dans une première étape, la douille 100 est aisément insérée à l'intérieur du trou 4 de la cloison 1, le diamètre extérieur du second manchon 218 n'excédant pas le diamètre d4 dudit trou 4 lorsque les languettes orientables 220 se trouvent dans leur position rétractée.

Les nervures 232 du second manchon 218 assurent son blocage en rotation à l'intérieur du trou 4, comme illustré sur la figure 13. Le second manchon constitue ainsi un moyen de renfort de la cloison 1. Le premier manchon 108 peut alors être vissé sur le second manchon 218. Au cours du vissage, sous l'effet de la contrainte radiale appliquée par le premier manchon 108 sur la face interne de leur partie avant 220a, les languettes 220 se déploient radialement vers l'extérieur, jusqu'à une position dans laquelle les surfaces d'appui 224 sont définies dans un plan perpendiculaire à l'axe B-B et font face à la face arrière 1b de la cloison 1. Cette position est illustrée sur la figure 14.

Selon un principe identique à celui de la première variante décrite précédemment, en poursuivant l'opération de vissage, il est possible de réduire la distance Dp entre la collerette externe 112 du premier manchon 108 et les surfaces d'appui 224. Lorsque l'opération est terminée, les parties avant 220a des languettes orientables 220 sont insérées dans le trou de la cloison, les surfaces d'appui 224 sont en appui sur la face arrière 1b de la cloison 1 et la collerette externe 112 du premier manchon 108 est en appui contre sa face avant 1a.

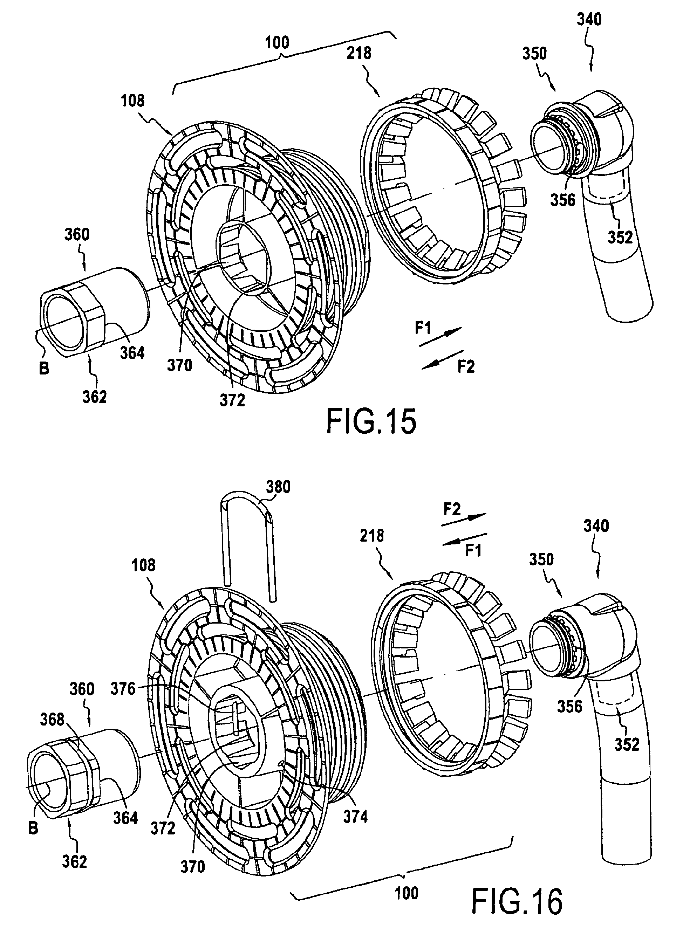

Les figures 15 à 18 illustrent d'autres exemples de réalisation des moyens d'adaptation du raccord conformément audit second mode de réalisation ne faisant pas partie de l'invention.

Contrairement aux raccords monoblocs 80, 140 décrits précédemment, le raccord 340 est ici constitué d'une première partie de raccordement 350 dont l'extrémité arrière 352 est apte à recevoir l'extrémité d'une conduite 3, et d'un embout 360, apte à être fixé sur la partie avant de l'élément de raccordement 350. Pour cela, une pluralité de languettes d'arrêt 356 réparties circonférentiellement à l'extrémité avant de l'élément de raccordement sont aptes à venir s'encliqueter dans une rainure interne correspondante (non représentée) prévue à l'extrémité arrière de l'embout 360. De cette manière, l'embout 360 et l'élément de raccordement 350 sont reliés l'un à l'autre, tout en restant libres en rotation l'un par rapport à l'autre.

Dans l'exemple illustré sur la figure 15, l'embout 360 est muni, à son extrémité avant, d'une tête hexagonale 362 terminée par un épaulement 364. Ladite tête hexagonale 362 est apte à être insérée dans un logement 370 de forme complémentaire prévu à l'extrémité avant du premier manchon 108 et terminé par un épaulement 372, apte à coopérer avec l'épaulement 364 pour le blocage en translation de l'embout 360 dans la direction d'insertion F1. Le blocage en rotation de l'embout 360 dans le premier manchon 108 est assuré par la forme hexagonale de sa tête 362. La tête 362 de l'embout 360 pourra évidemment présenter toute autre forme apte à coopérer avec un logement correspondant de la douille 100 pour assurer un blocage en translation et en rotation dudit embout.

Au montage, l'embout 360 est introduit dans le premier manchon 108 dans la direction d'insertion F1. L'épaulement 364 de l'embout 360 vient alors en appui contre l'épaulement interne 372 du premier manchon 108 et assure un blocage en translation du raccord 340 dans la direction F1.

Puis l'extrémité arrière de l'embout 360 est fixée à l'extrémité avant de l'élément de raccordement 350, insérée, à l'arrière du premier manchon 108, dans la direction F2. Une collerette 354, prévue à distance de l'extrémité avant de l'élément de raccordement 350 et apte à venir en appui sur la face arrière du premier manchon 108 après montage, assure alors le blocage en translation du raccord dans la direction F2.

Lorsque l'embout 360 est bloqué en rotation dans le premier manchon 108, par exemple par sa tête hexagonale 62 coopérant avec un logement correspondant 370, le fait que l'élément de raccordement 350 reste libre en rotation par rapport à l'embout 360 assure que, lors de l'opération de vissage du premier manchon 108 dans le second 218, l'élément de raccordement reste quasiment immobile.

Selon cet exemple de réalisation, les moyens d'adaptation du raccord 340 sont constitués par la tête 362 de l'embout 360, le logement correspondant 370 du premier manchon 108 et la collerette externe 354 de l'élément de raccordement.

Selon un autre exemple de réalisation illustré sur la figure 16, l'élément de raccordement 350 du raccord 340 est dépourvu de collerette externe. La tête 362 de l'embout 360 est munie d'une rainure circonférentielle 368 et le premier manchon 108 est percé de deux trous 374 prolongés par des rainures parallèles 376 réalisées sur les faces internes du logement hexagonal 370 du premier manchon.

Lorsque l'embout 360 est inséré dans le premier manchon et que son épaulement six pans 364 est en contact avec l'épaulement interne 372 de la douille 100, la rainure circonférentielle 368 de la tête 362 vient en regard des rainures 376 formées sur les faces internes du logement hexagonal 370 du premier manchon 108. Une goupille d'arrêt en « U » 380 peut alors être insérée par les trous 374, de manière à coopérer avec les rainures 368 respectives de la tête 362 de l'embout 360 et du premier manchon 108. La goupille 380 assure ainsi le blocage en translation du raccord 340 à l'intérieur de la douille dans la direction axiale A-A.

Selon cet exemple de réalisation, les moyens d'adaptation du raccord 340 sont constitués par la tête 362 de l'embout 360 munie de la rainure 368, par le logement correspondant 370 du premier manchon 108 et ses rainures 376, par les trous traversants 374 de la douille, ainsi que par la goupille 380.

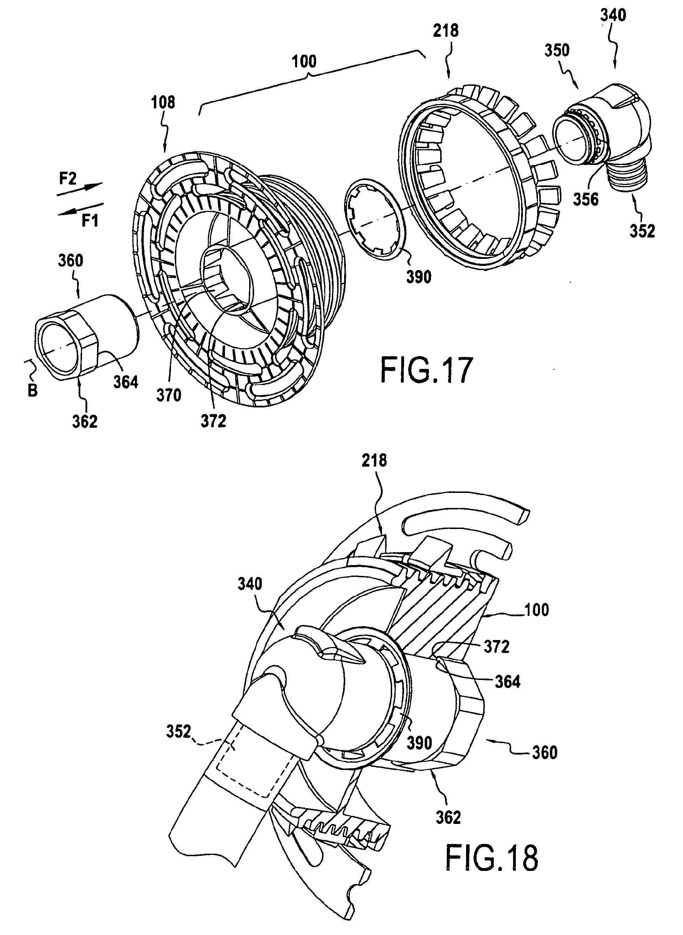

Selon encore un autre exemple de réalisation du raccord illustré sur les figures 17 et 18, le blocage en translation peut être assuré, non pas par une goupille comme dans l'exemple précédent, mais grâce à une rondelle crantée intérieurement 390. Au montage, la rondelle est enfilée, à l'arrière du premier manchon 108, entre l'élément de raccordement 350 et l'embout 360. Lors de l'assemblage des deux parties du raccord 340, les dents 392 de la rondelle d'arrêt 390 viennent s'enfoncer dans la matière de l'embout 360. Le diamètre externe de la rondelle 390 étant supérieur au diamètre interne du premier manchon 108, la rondelle 390 est en appui sur la face arrière de celui-ci. Ainsi, le blocage en translation est assuré par l'épaulement 364 de l'embout 360, d'une part, et la rondelle d'arrêt à dents 390 d'autre part.

Selon cet exemple de réalisation, les moyens d'adaptation du raccord 340 sont constitués par la tête 362 de l'embout 360, le logement correspondant 370 du premier manchon 108 et la rondelle crantée intérieurement 390.

## Revendications

1. Système de fixation d'un raccord pour conduite de transport de fluide (3) sur une cloison (1), destiné à être monté dans un trou circulaire (4) pratiqué dans l'épaisseur de ladite cloison (1), le diamètre (d4) dudit trou (4) étant suffisant pour permettre l'introduction du raccord (80) par l'extérieur, ledit système de fixation comportant une douille (10) munie d'une collerette externe (12) venant prendre appui sur la face avant (1a) de la cloison (1), des moyens d'appui interne (30) aptes à venir en appui sur la face arrière de la cloison, des moyens d'adaptation du raccord (78, 90) et des moyens de renfort (10) de la cloison (1), **caractérisé en ce que** les moyens d'appui interne comprennent au moins une mâchoire (30) insérée dans la douille (10) et mobile radialement vers l'extérieur de celle-ci et **en ce que** ledit système de fixation comprend en outre un dispositif d'expansion apte à coopérer avec la au moins une mâchoire (30) pour la déplacer radialement vers l'extérieur de la douille (10).

2. Système de fixation selon la revendication 1, **caractérisé en ce qu'**il comprend en outre des moyens de réglage de la distance (Dp) entre la collerette externe (12) de la douille (10) et les dits moyens d'appui interne (30).

3. Système de fixation selon la revendication 1 ou 2, **caractérisé en ce que** les moyens de renfort de la cloison comprennent la douille (10), dont le diamètre extérieur (d1, d12) est sensiblement égal à celui du trou (4) de la cloison.

4. Système de fixation selon l'une quelconque des revendications 1 à 3, **caractérisé en ce que** les moyens d'appui interne comprennent deux mâchoires (30), chacune étant logée dans une fenêtre (16) prévue dans la douille (10), les dites mâchoires (30) étant aptes à se déplacer vers l'extérieur dans des directions radialement opposées.

5. Système de fixation selon la revendication 4, **caractérisé en ce que** la douille (10) comporte une échancrure (32) prévue entre les dites fenêtres (16) et permettant le montage des mâchoires (30) dans la douille (10) et le passage de la conduite (3).

6. Système de fixation selon la revendication 4 ou 5, **caractérisé en ce que** chaque mâchoire (30) comprend une surface d'appui plane (34) apte à venir en appui contre la face arrière de la cloison (1), et prolongée par une portion avant formant moyen de renfort, munie d'une surface convexe (31), apte à venir en appui sur la paroi interne du trou (4) de la cloison (1) lorsque la surface d'appui (34) de la mâchoire (30) vient en contact avec la face arrière de la cloison (1).

7. Système de fixation selon l'une quelconque des revendications 1 à 6, **caractérisé en ce que** le dispositif d'expansion est un noyau d'expansion (60) conformé avec une collerette externe (66) apte à s'adapter à une collerette située à l'avant de la douille (10) et apte à être inséré à l'intérieur de la douille (10) afin de coopérer avec la ou chaque mâchoire (30) pour la déplacer radialement vers l'extérieur de la douille (10).

8. Système de fixation selon la revendication 7, **caractérisé en ce que** la douille (10) comporte au moins un trou (26, 28) et la ou chaque mâchoire (30) comporte au moins une partie filetée (46), chaque trou de la douille et ladite partie filetée correspondante étant aptes à venir en alignement lorsque le noyau d'expansion (60) est monté dans ladite douille (10), permettant de bloquer, par vis (48), la position radiale de la ou chaque mâchoire (30), et de régler la distance entre la collerette (12) de la douille (10) et la ou chaque mâchoire (30).

9. Système de fixation selon la revendication 7 ou 8, **caractérisé en ce que** le noyau d'expansion (60) présente une partie de guidage (62) de diamètre extérieur croissant destinée à coopérer avec la ou chaque mâchoire (30) en vue de son déplacement radial.

10. Système de fixation selon la revendication 5 et l'une quelconque des revendications 7 à 9, **caractérisé en ce que** le noyau d'expansion (60) comprend une échancrure (79) apte à être alignée avec l'échancrure (32) de la douille (10) lorsque le noyau d'expansion (60) est monté dans la douille (10), de manière à permettre le passage de la conduite.

11. Système de fixation selon l'une quelconque des revendications 7 à 10, **caractérisé en ce que** le noyau d'expansion (60) comporte un épaulement interne (78) situé à proximité de sa collerette externe (66) et sur lequel une collerette (86) d'un raccord est apte à venir en appui.

12. Système de fixation selon la revendication 11, **caractérisé en ce que** le noyau d'expansion (60) comporte un filetage interne (76) entre ledit épaulement interne (78) et ladite collerette externe (66) du noyau d'expansion, apte à coopérer avec un filetage externe (92) d'une pièce de blocage (90) de manière à bloquer la collerette (86) d'un raccord (80) contre l'épaulement interne (78) du noyau d'expansion (60).

## Patentansprüche

1. System zur Befestigung eines Verbinders für eine Fluidtransportleitung (3) an einer Trennwand (1), der dazu bestimmt ist, in einem in der Dicke der Trennwand (1) ausgebildeten kreisförmigen Loch (4) angebracht zu werden, wobei der Durchmesser (d4) des Lochs (4) ausreichend ist, um das Einführen des Verbinders (80) über die Außenseite zu ermöglichen, wobei das Befestigungssystem eine Tülle (10), die mit einem Außenkragen (12) versehen ist, welcher sich an der Vorderseite (1a) der Trennwand (1) abstützt, Innenanlagemittel (30), die geeignet sind, an der Rückseite der Trennwand in Anlage zu kommen, Mittel zum Anpassen des Verbinders (78, 90) sowie Mittel zum Verstärken (10) der Trennwand (1) umfaßt, **dadurch gekennzeichnet, daß** die Innenanlagemittel wenigstens eine Backe (30) umfassen, die in die Tülle (10) eingefügt wird und zu deren Außenseite radial beweglich ist, und daß das Befestigungssystem ferner eine Spreizvorrichtung umfaßt, die geeignet ist, mit der wenigstens einen Backe (30) zusammenzuwirken, um sie radial zur Außenseite der Tülle (10) zu bewegen.

2. Befestigungssystem nach Anspruch 1, **dadurch gekennzeichnet, daß** es ferner Mittel zum Einstellen des Abstandes (Dp) zwischen dem Außenkragen (12) der Tülle (10) und den Innenanlagemitteln (30) umfaßt.

3. Befestigungssystem nach Anspruch 1 oder 2, **dadurch gekennzeichnet, daß** die Mittel zum Verstärken der Trennwand die Tülle (10) umfassen, deren Außendurchmesser (d1, d12) im wesentlichen gleich demjenigen des Lochs (4) der Trennwand ist.

4. Befestigungssystem nach einem der Ansprüche 1 bis 3, **dadurch gekennzeichnet, daß** die Innenanlagemittel zwei Backen (30) umfassen, wobei jede in einem in der Tülle (10) vorgesehenen Fenster (16) aufgenommen ist, wobei die Backen (30) geeignet sind, sich in radial entgegengesetzten Richtungen nach außen zu bewegen.

5. Befestigungssystem nach Anspruch 4, **dadurch gekennzeichnet, daß** die Tülle (10) eine Aussparung (32) umfaßt, die zwischen den Fenstern (16) vorgesehen ist und das Anbringen der Backen (30) in der Tülle (10) sowie den Durchgang der Leitung (3) ermöglicht.

6. Befestigungssystem nach Anspruch 4 oder 5, **dadurch gekennzeichnet, daß** jede Backe (30) eine ebene Anlagefläche (34) umfaßt, die geeignet ist, an der Rückseite der Trennwand (1) in Anlage zu kommen, und die durch einen ein Verstärkungsmittel bildenden vorderen Abschnitt fortgesetzt ist, der mit einer konvexen Fläche (31) versehen ist, welche geeignet ist, an der Innenwand des Lochs (4) der Trennwand (1) in Anlage zu kommen, wenn die Anlagefläche (34) der Backe (30) mit der Rückseite der Trennwand (1) in Kontakt gelangt.

7. Befestigungssystem nach einem der Ansprüche 1 bis 6, **dadurch gekennzeichnet, daß** die Spreizvorrichtung ein Spreizkern (60) ist, der mit einem Außenkragen (66) ausgebildet ist, welcher geeignet ist, auf einen am vorderen Teil der Tülle (10) gelegenen Kragen zu passen, und der geeignet ist, in das Innere der Tülle (10) eingefügt zu werden, um mit der oder jeder Backe (30) zusammenzuwirken, um sie radial zur Außenseite der Tülle (10) zu bewegen.

8. Befestigungssystem nach Anspruch 7, **dadurch gekennzeichnet, daß** die Tülle (10) wenigstens ein Loch (26, 28) umfaßt und die oder jede Backe (30) wenigstens einen Gewindeteil (46) umfaßt, wobei jedes Loch der Tülle und der entsprechende Gewindeteil geeignet sind, miteinander zu fluchten, wenn der Spreizkern (60) in der Tülle (10) angebracht ist, was ermöglicht, die radiale Position der oder einer jeden Backe (30) mittels Schraube (48) festzulegen und den Abstand zwischen dem Kragen (12) der Tülle (10) und der oder einer jeden Backe (30) einzustellen.

9. Befestigungssystem nach Anspruch 7 oder 8, **dadurch gekennzeichnet, daß** der Spreizkern (60) einen Führungsteil (62) mit zunehmendem Außendurchmesser aufweist, der dazu bestimmt ist, mit der oder jeder Backe (30) zwecks ihrer Radialbewegung zusammenzuwirken.

10. Befestigungssystem nach Anspruch 5 und einem der Ansprüche 7 bis 9, **dadurch gekennzeichnet, daß** der Spreizkern (60) eine Aussparung (79) umfaßt, die geeignet ist, mit der Aussparung (32) der Tülle (10) ausgerichtet zu werden, wenn der Spreizkern (60) in der Tülle (10) angebracht ist, um den Durchgang der Leitung zu ermöglichen.

11. Befestigungssystem nach einem der Ansprüche 7 bis 10, **dadurch gekennzeichnet, daß** der Spreizkern (60) eine Innenschulter (78) umfaßt, die in der Nähe seines Außenkragens (66) gelegen ist und an der ein Kragen (86) eines Verbinders in Anlage zu kommen geeignet ist.

12. Befestigungssystem nach Anspruch 11, **dadurch gekennzeichnet, daß** der Spreizkern (60) ein Innengewinde (76) zwischen der Innenschulter (78) und dem Außenkragen (66) des Spreizkerns umfaßt, welches geeignet ist, mit einem Außengewinde (92) eines Blockierteils (90) zusammenzuwirken, um den Kragen (86) eines Verbinders (80) an der Innenschulter (78) des Spreizkerns (60) festzulegen.

## Claims

1. A system for mounting a connector for fluid conveying pipe (3) on a partition (1), intended to be mounted in a circular hole (4) made in the thickness of said partition (1), the diameter (d4) of said hole (4) being sufficient to allow the inserting of the connector (80) from the outside, said mounting system comprising a bushing (10) provided with an outer collar (12) bearing upon the front side (1a) of the partition (1), inner bearing means (30) suitable for bearing upon the back side of the partition, connector adapting means (78, 90) and reinforcement means (10) to reinforce the partition (1), **characterized in that** the inner bearing means comprise at least one jaw (30) that is inserted in the bushing (10) and mobile radially and outwardly therefrom, and **in that** said mounting system further comprises an expanding device suitable for cooperating with the at least one jaw (30) to move the jaw radially and outwardly from the bushing (10).

2. The mounting system according to claim 1, **characterized in that** it further comprises means for adjusting the distance (Dp) between the outer collar (12) of the bushing (10) and said inner bearing means (30).

3. The mounting system according to claim 1 or 2, **characterized in that** the partition reinforcement means comprise the bushing (10) whose outer diameter (d1, d12) is substantially equal to the diameter of the hole (4) of the partition.

4. The mounting system according to any of claims 1 to 3, **characterized in that** the inner bearing means comprise two jaws (30) each being housed in a window (16) provided in the bushing (10), said jaws (30) being capable of moving outwardly in radially opposite directions.

5. The mounting system according to claim 4, **characterized in that** the bushing (10) comprises a notch (32) provided between said windows (16) allowing mounting of the jaws (30) inside the bushing (10) and passing of the pipe (3).

6. The mounting system according to claim 4 or 5, **characterized in that** each jaw (30) comprises a planar bearing surface (34) suitable for bearing upon the back side of the partition (1) and extended by a front portion forming reinforcement means provided with a convex surface (31) suitable for bearing upon the inner wall of the hole (4) of the partition (1) when the bearing surface (34) of the jaw (30) comes into contact with the back side of the partition (1).

7. The mounting system according to any of claims 1 to 6, **characterized in that** the expanding device is an expanding core (60) conformed with an outer collar (66) suitable for adapting to a collar located at the front of the bushing (10) and able to be inserted inside the bushing (10) so as to cooperate with the or each jaw (30) for radial displacement thereof towards the outside of the bushing (10).

8. The mounting system according to claim 7, **characterized in that** the bushing (10) comprises at least one hole (26, 28) and the or each jaw (30) comprises at least one threaded part (46), each hole of the bushing and said corresponding threaded part being suitable for aligning themselves when the expanding core (60) is mounted in said bushing (10), enabling the locking by screws (48) of the radial position of the or each jaw (30) and the adjustment of the distance between the collar (12) of the bushing (10) and the or each jaw (30).

9. The mounting system according to claim 7 or 8, **characterized in that** the expanding core (60) has a guiding part (62) of increasing outer diameter intended to cooperate with the or each jaw (30) for radial displacement thereof.

10. The mounting system according to claim 5 and any of claims 7 to 9, **characterized in that** the expanding core (60) comprises a notch (79) able to be aligned with the notch (32) of the bushing (10) when the expanding core (60) is mounted in the bushing (10) so as to allow passing of the pipe.

11. The mounting system according to any of claims 7 to 10, **characterized in that** the expanding core (60) comprises an inner shoulder (78) located in the vicinity of its outer collar (66) and on which a collar (86) of a connector is able to bear.

12. The mounting system according to claim 11, **characterized in that** the expanding core (60) comprises an inner thread (76) between said inner shoulder (78) and said outer collar (66) of the expanding core, suitable for cooperating with the outer thread (92) of a locking part (90) so as to lock the collar (86) of a connector (80) against the inner shoulder (78) of the expanding core (60).
